# EUROPÄISCHE PATENTSCHRIFT

(11) **EP 1 007 458 B1**
(45) Veröffentlichungstag und Bekanntmachung des Hinweises auf die Patenterteilung: **21.11.2001**
(21) Anmeldenummer: 98948785.5
(22) Anmeldetag: 13.08.1998
(51) Int. Cl.: B65H 19/12, B65G 47/22

(54) **TRANSPORTEINRICHTUNG**
CONVEYOR DEVICE
DISPOSITIF DE TRANSPORT

(30) Priorität: 22.08.1997 DE 19736491
(43) Veröffentlichungstag der Anmeldung: 14.06.2000
(73) Patentinhaber: Koenig & Bauer Aktiengesellschaft, 97080 Würzburg (DE)
(72) Erfinder: BIERBAUM, Günter, Johannes, D-97265 Hettstadt (DE); RÖDER, Klaus, Walter, D-97074 Würzburg (DE)
(86) Internationale Anmeldenummer: DE9802332
(87) Internationale Veröffentlichungsnummer: WO9910266

(56) Entgegenhaltungen:
- EP-A- 0 227 887
- EP-A- 0 387 365
- EP-A- 0 402 902
- DE-A- 4 334 582
- US-A- 5 044 862

## Beschreibung

Die Erfindung betrifft eine Einrichtung entsprechend dem Oberbegriff des Anspruches 1 (vgl. DE 196 06 554 C1).

Der Erfindung liegt die Aufgabe zugrunde, eine weitere Einrichtung zum Positionieren einer Papierbahnrolle auf einem Transportwagen eines Unterflur-Transportsystems zu schaffen.

Diese Aufgabe wird erfindungsgemäß durch die Merkmale des Anspruches 1 gelöst.

Ein Ausführungsbeispiel der Erfindung ist in der Zeichnung dargestellt und wird im folgenden näher beschrieben.

Es zeigen:
- Fig. 1: einen Querschnitt durch ein Unterflur-Transportsystem mit einer Papierbahnrolle und der Einrichtung zum Positionieren in Ruhestellung;
- Fig. 2: eine Darstellung entsprechend Fig. 1, jedoch mit der Einrichtung zum Positionieren in Arbeitsstellung.

In einem Kanal 2 unterhalb einer Flurebene 1 ist ein mittels Motor 3 und Laufrädern 4; 6 auf Schienen 7; 8 fahrbarer Transportwagen 9 eines Unterflur-Transportsystems 11 zum Transport von Papierbahnrollen 12 angeordnet.

Der Transportwagen 9 hat eine obere an sich bekannte Transportplattform 13. Sie hat eine längsgerichtete rinnenförmige Vertiefung 14 und einen tiefsten Punkt. Die Transportplattform 13 ragt über die Flurebene 1 hinaus, sie muß es aber nicht. Die rinnenförmige Vertiefung 14 dient zur Längsachsenausrichtung und Lagefixierung der Papierbahnrolle 12. Im Kanal 2 ist eine Papierbahnrollen-Vorausrichteeinrichtung 16 vorgesehen. Sie besteht z. B. aus links und rechts neben den Schienen 7; 8 angeordneten Ausrichteelementen, z. B. den Ausrichteschienen 17; 18.

Mindestens in Ausrichtestellung A sind sie oberhalb der Flurebene 1. In Ruhestellung B können beide Ausrichteschienen 17; 18 unterhalb der Flurebene 1 stehen, oder mindestens eine, z. B. die linke Ausrichteschiene 17 steht dauernd über die Flurebene 1 hinaus.

Sie dient dann als Rollstop für zugeführte Papierbahnrollen 12. Beide Ausrichteschienen 17; 18 sind in Ausrichtestellung A bzw. Rollstopstellung B entlang ihrer Querachse 19; 21 in einem spitzen Winkel Alpha, z. B. 30
bis 50° geneigt. Ihre Längsachsen 22, 23 verlaufen parallel zur Flurebene 1.

Mindestens eine der Ausrichteschienen 17; 18 ist heb-und senkbar bzw. schwenkbar.

In Ausrichtestellung A schneiden sich die Geraden entlang der Querachse 19; 21 der linken Ausrichteschiene 17 und der Querachse 21 der rechten Ausrichteschiene 18 in einem Punkt 24 der links oder rechts neben einer senkrechten Längsebene 26, die durch den tiefsten Punkt der rinnenförmigen Vertiefung 14 der Transportplattform 13 geht.

### Die Einrichtung arbeitet wie folgt:

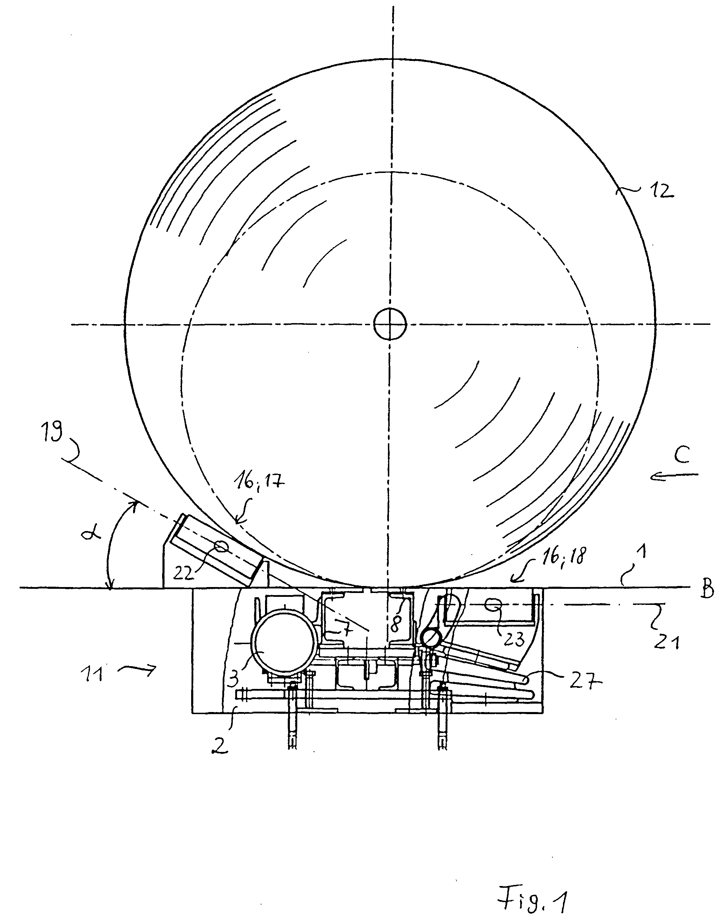

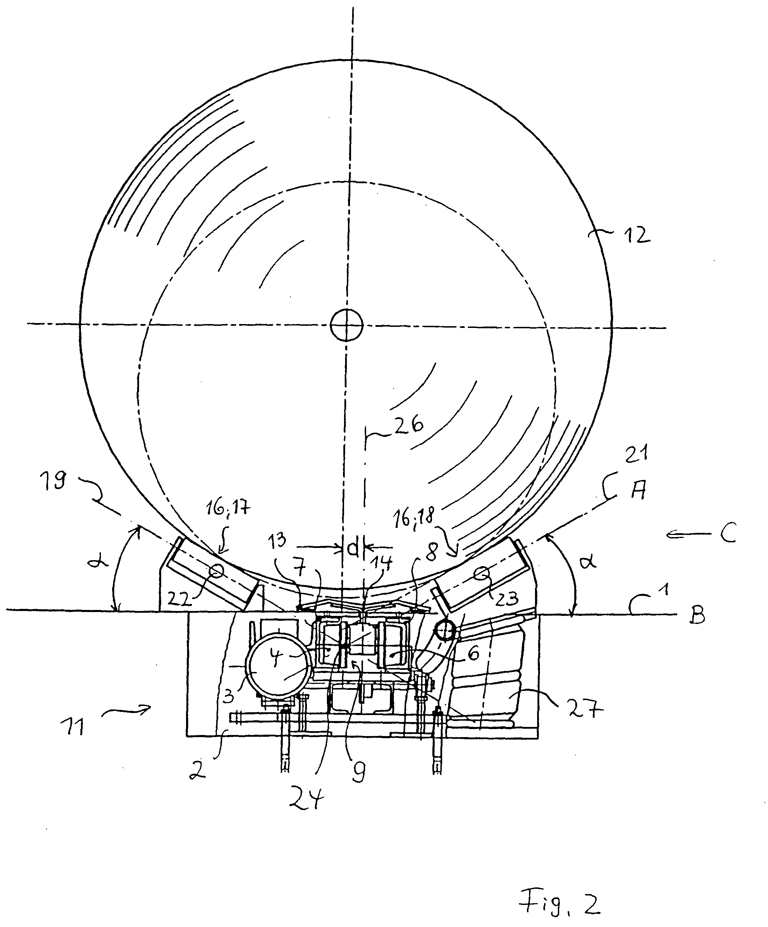

Eine Papierbahnrolle 12 wird aus Richtung C kommend über die in Ruhestellung B befindliche rechte Ausrichteschiene 18 in Gegenuhrzeigerdrehrichtung gerollt, bis sie die linke Ausrichteschiene 17 berührt (Fig. 1). Nunmehr wird mittels einer Hebeeinrichtung, z. B. mittels eines oder mehrerer pneumatisch betätigbarer Balgzylinder 27 die rechte Ausrichteschiene 18 um den Drehwinkelbetrag Alpha in die Ausrichtestellung A geschwenkt. Dadurch wird die Papierbahnrolle 12 nach oben angehoben (Fig. 2). Ein Transportwagen 9 wird nunmehr unter die angehobene Papierbahnrolle 12 gebracht. Dabei befindet sich die Papierbahnrolle 12 um einen (horizontalen) Differenzbetrag d außermittig über den tiefsten Punkt oder der rinnenförmigen Vertiefung 14 der Transportplattform 13.

Nachfolgend wird die Papierbahnrolle 12 durch Betätigen des oder der Balgzylinder 27 auf die Transportplattform 13 gebracht, wobei sie sich geringfügig in Uhrzeigerdrehrichtung bewegt, so daß sie über der Vertiefung 14 ihre Endlage einnimmt. Der Differenzbetrag d ist verschwunden. Die rechte Ausrichteschiene 18 nimmt ihre ursprüngliche Ruhestellung B ein.

## Patentansprüche

1. Einrichtung zum Positionieren einer Papierbahnrolle (12) auf einem Transportwagen (9) eines Unterflur-Transport-Systems (11), **dadurch gekennzeichnet, daß** oberhalb einer Flurebene (1), beidseitig, parallel zu einem Weg des Transportwagens (9), in Querrichtung zum Weg beabstandet und in einem spitzen Winkel (Alpha) zur Flurebene (1) angeordnete Ausrichteschienen (17; 18) vorgesehen sind, daß mindestens eine der Ausrichteschienen (17 oder 18) heb-und senkbar oder schwenkbar ist.

2. Einrichtung nach Anspruch 1, **dadurch gekennzeichnet, daß** sich zwei Geraden entlang von Querachsen (19; 21) der linken (17) und rechten (18) Ausrichteschiene (17; 18) in ihrer Anhebestellung (A) in einem Punkt (24) schneiden, der neben einer senkrechten Längsebene (26) durch den tiefsten Punkt der Transportplattform (13) geht.

## Claims

1. Device for positioning a paper web reel (12) on a transport carriage (9) of an underfloor transport system (11), **characterized in that** alignment rails (17; 18) are provided above a floor level (1), on both sides of and parallel to a path of the transport carriage (9), at a distance from the path in the transverse direction and at an acute angle (alpha) to the plane of the floor (1), and **in that** at least one of the alignment rails (17 or 18) can be raised and lowered or pivoted.

2. Device according to Claim 1, **characterized in that** two straight lines along transverse axes (19; 21) of the left (17) and right (18) alignment rail (17; 18), in their raised position (A) intersect at a point (24) which, beside a vertical longitudinal plane (26), goes through the lowest point of the transport platform (13).

## Revendications

1. Dispositif de positionnement d'un rouleau de bande de papier (12) sur un chariot de transport (9) d'un système de transport sous plancher (11), **caractérisé en ce qu'**au-dessus d'un plan de plancher (1), des deux côtés, parallèlement à une voie du chariot de transport (9), sont prévus des glissières d'orientation (17; 18), espacées de la voie en direction transversale et disposés sous un angle aigu (alpha) par rapport au plan de plancher (1), **en ce qu'**au moins l'une des glissières d'orientation (17 ou 18) est susceptible d'être levée et abaissée, ou bien d'être pivotée.

2. Dispositif selon la revendication 1, **caractérisé en ce que** deux droites, tracées le long d'axes transversaux (19; 21) de la glissière d'orientation (17; 18) gauche (17) et droite (18), lorsqu'elles sont à leur position de soulèvement (A), se coupent en un point (24), situé à côté d'un plan longitudinal (26) vertical, passant au point le plus bas de la plate-forme de transport (13).
